# EUROPEAN PATENT APPLICATION

(11) **EP 1 233 552 A2**
(43) Date of publication of application: **21.08.2002**
(21) Application number: 02003157.1
(22) Date of filing: 15.02.2002
(51) Int. Cl.: H04B 10/207

(54) **Integrated wdm/splitter multiplexer module**

(30) Priority: 15.02.2001 US 784501
(71) Applicant: Alcatel USA Sourcing, L.P., Plano, Texas 75075-5813 (US)
(72) Inventor: Redmond, Robert W., Petaluma, California 94954 (US)
(74) Representative: Dreiss, Fuhlendorf, Steimle & Becker

(57) **Abstract**

An integrated WDM/splitter multiplexer module for integrating optical signals operating to transport point-to-multipoint information signals with optical signals operating to transport point-to-point information signals. The module is comprised of a splitter component which is operable to condition the point-to-multipoint optical signals that it receives onto a plurality of waveguides organized as a first ribbon fiber. A WDM array component is spliced to the first ribbon fiber by a first ribbon splicer. A fiber bank sources the point-to-point optical signals onto a second ribbon fiber. The second ribbon fiber is also spliced onto the WDM array by a second ribbon splicer.

## Description

### BACKGROUND OF THE INVENTION

### Technical Field of the Invention

The present invention generally relates to components used in fiber optic signal transmission systems and, in particular, to an integrated WDM/splitter multiplexer module for combining point-to-point optical signals with point-to-multipoint optical signals.

### Description of Related Art

As networks face increasing bandwidth demand and diminishing fiber availability in the existing fiber plant, network providers are migrating towards a new network technology called the optical network. Optical networks are high-capacity telecommunications networks comprised of optical and opto-electronic technologies and components, and provide wavelength-based services in addition to signal routing, grooming, and restoration at the wavelength level. These networks, based on the emergence of the so-called optical layer, operating entirely in the optical domain in transport networks, can not only support extraordinary capacity (up to terabits per second (Tbps)), but also provide reduced costs for bandwidth-intensive applications such as the Internet, interactive video-on-demand and multimedia, and advanced digital services.

In many locations, optical fibers have been deployed for transmitting digital telephony signals, such as signals carrying telephone conversations, facsimile transmissions or Internet data communications. The low loss of signal (light) over distance, and the reflective nature of the transmission make optical fibers an excellent medium for data transmission and networking. Additionally, because of its large information-carrying capacity (bandwidth), optical fibers are suitable for transmitting even high information content signals including full motion video.

Optical fibers composed of silica have three useful transmission bands located at about 850, 1310 and 1550 nanometers (nm). The existence of these bands is partly a function of the characteristics of the fiber itself, including such factors as the amount of optical absorption and dispersion within the fiber at different wavelengths, and partly a function of practical limitations on the availability of suitable devices, such as lasers and LED's, used for coupling light into the fiber at different wavelengths. As a result of these and other factors, it is currently most practical, at least for the purposes of digital telephony, to transmit either within the 1310 nm band or the 1550 nm band. The 850 band is typically not used for digital telephony.

An optical fiber may interconnect a host digital terminal (HDT) of an access provider (such as a telephone company) central office (CO) with a curbside optical network unit (ONU). The HDT provides an interface between the optical fiber and the other components of the CO. The ONU provides an interface between the HDT and a customer's premises (i.e., homes or offices). Usually only a single optical fiber is deployed between the CO and the ONU which carries both upstream digital telephony signals(i.e., signals sent from the ONU to the CO) and downstream digital telephony signals (i.e., signals sent from the CO to the ONU). Typically, the upstream and downstream signals are transmitted within separate transmission bands of a single optical fiber to avoid signal conflicts, cross talk and the like. This is referred to as broadband wave division multiplexing.

Of the several key enabling technologies necessary for the successful deployment of optical networks, wavelength division multiplexing (WDM) has emerged as a crucial component for facilitating the transmission of diverse payloads regardless of their bit-rate and format over the optical layer. Wavelength division multiplexing increases the capacity of embedded fiber by first assigning incoming optical signals to specific wavelengths within a designated frequency band (i.e., channels separated by a predetermined spacing) and then multiplexing the resulting signals out onto a single fiber. Since incoming signals are not terminated in the optical layer, the interface is bit-rate and format independent, allowing service/network providers to integrate the wavelength division multiplexing technology with existing equipment in the network. Accordingly, by combining multiple optical signals using wavelength division multiplexing, they can be amplified as a group and transported over a single fiber to increase capacity in a cost-effective manner.

Advances in WDM technology have consequently allowed for the transmission of both digital telephony signals and analog video (AV) signals on a single optical fiber. AV signals, such as those provided by cable television (CAT) companies can now be transmitted from the CO to the ONU for subsequent routing into homes or offices. As a result, a service provider (i.e., a telephone company) operating the optical fibers can thereby provide both telephone service and television service to its customers.

Problems, however, exist in the methods by which the primary components used for transmitting the digital telephony signals and the AV signals are constructed. Presently, the current method involves fusion splicing each separate output leg (optical fiber) of a splitter transmitting AV signals to a WDM component. If the splitter has a 1:16 split ratio, this results in 16 separate fusion splices. Additionally, each separate optical fiber which arrives from a fiber bank transmitting digital telephony signals, must be individually fusion-spliced to the WDM input as well. If there are 16 optical fibers arriving from the fiber bank, this results in an additional 16 fusion splices.

Thus, a total of 32 separate fusion splices would have to be made. Furthermore, where 2:1 WDM components are used, as is typical in the current solutions, 16 individual WDM components are required for the complete assembly. Consequently, a large number of components must be separately interconnected, resulting in increased manufacturing costs in terms of both components and labor. Moreover, costs are also incurred from the downtime that results from the repairs required for maintaining such relatively complicated yet fragile components.

### SUMMARY OF THE INVENTION

Accordingly, the present invention advantageously provides an integrated multiplexer module that combines multiple WDM components into an array which is integrally coupled to a splitter for merging point-to-multipoint signals with point-to-point signals in a common optical medium. The splitter component of the integrated WDM/splitter multiplexer module is operable to condition the point-to-multipoint signals it receives into a plurality of waveguides organized as a first ribbon fiber. The WDM array component is spliced to this first ribbon fiber, preferably by means of a ribbon-to-ribbon splicer ("ribbon splicer"). Additionally, a fiber bank is operable to source the point-to-point signals onto a second ribbon fiber. This second ribbon fiber is also spliced onto the WDM array using a ribbon splicer.

In one exemplary embodiment, a splitter with the commonly used split ratio of 1:16, and a WDM array with a common 2:1 ratio may be implemented. The splitter conditions an AV signal into 16 waveguides organized as first and second ribbon fibers. The fiber bank sources a digital telephony signal onto third and fourth ribbon fibers. Each of the four ribbon fibers is comprised of 8 waveguides. The WDM array is then spliced to each of the four ribbon fibers by ribbon splicers. Additionally, in order to take advantage of the high levels of manufacturability afforded by semiconductor photolithography techniques, the integrated multiplexer module is preferably provided as a silicon planar light wave circuit.

In a further aspect, the present invention is directed to a method of manufacture of an integrated splitter/WDM module.

### BRIEF DESCRIPTION OF THE DRAWINGS

A more complete understanding of the present invention may be had by reference to the following Detailed Description when taken in conjunction with the accompanying drawings wherein:
FIG. 1 depicts a functional block diagram of an exemplary embodiment of a telecommunications network having an access network portion wherein the teachings of the present invention may be advantageously practiced;
FIG. 2 depicts a functional block diagram of an exemplary embodiment of a host digital terminal within an access network having an integrated WDM/splitter multiplexer module of the present invention;
FIG. 3 depicts a block diagram of an exemplary embodiment of the integrated WDM/splitter multiplexer module used to combine digital telephony signals with analog video signals; and
FIG. 4 is a flow chart of a process to construct an integrated WDM/splitter multiplexer module in accordance with the teachings of the present invention.

### DETAILED DESCRIPTION OF THE DRAWINGS

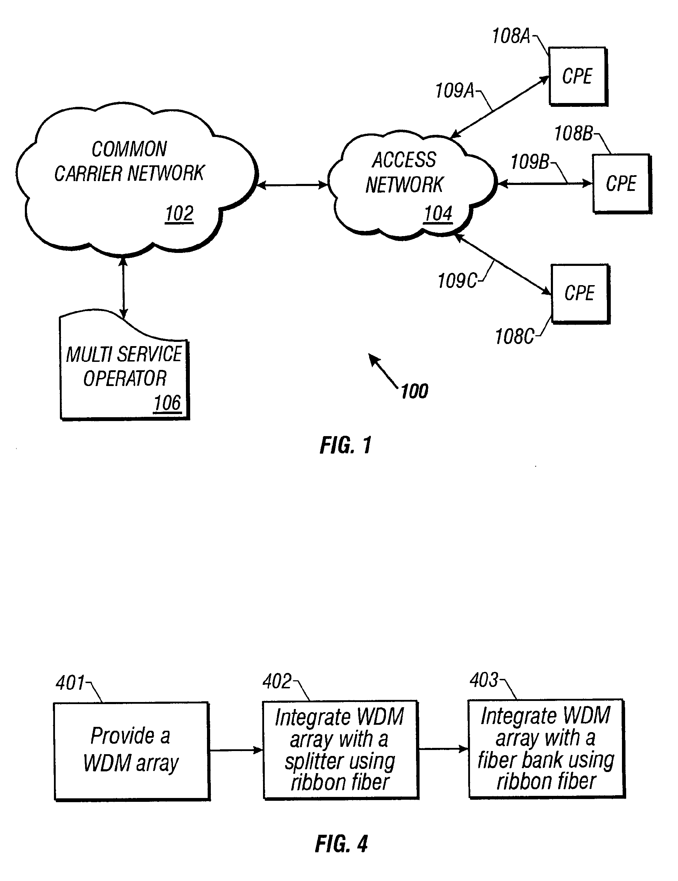

In the drawings, like or similar elements are designated with identical reference numerals throughout the several views thereof, and the various elements depicted are not necessarily drawn to scale. Referring now to FIG. 1, depicted therein is a functional block diagram of an exemplary embodiment of a telecommunications network 100 having an access network portion 104 that is provided between a high-speed common carrier network 102 (i.e., "backbone") and the customer premises equipment (CPE) units 108A-C provided at a customer's premises. A multi-service operator (MSO) 106, coupled to the common carrier network core 102, is illustrative of a service provider with various services that may be accessed via CPE units 108A-108C.

Those skilled in the art should readily appreciate upon reference hereto that the telecommunications network 100 of FIG. 1 is illustrative of a network that provides a bidirectional end-to-end connection using one or more optical fiber paths.

The common carrier network 102 is the part of the communications network 100 which carries the heaviest traffic at the highest speeds. Speeds of signals transmitted on the fiber cables of the common carrier network 102 can be measured in the gigabits per second range. The common carrier network 102 is also designed to connect to lower speed channels or clusters of the local access network 104.

The smaller access network 104 may represent several local access providers or a single provider. The signals on this network are transmitted at a slower (e.g., megabits per second) rate. In an exemplary embodiment, the access network 104 consists of a network operable to transmit an analog video (AV) signal and a bidirectional telephony signal over a single optical fiber to a customer's premises (i.e., a subscriber's home or office). Reference numerals 109A-109C refer to exemplary fiber paths serving individual CPEs 108A-108C, respectively. Within the customer's premises there may be one or more CPE units (which could be a personal computer, television, telephone, multimedia terminal, and the like) to access the services provided by MSO 106.

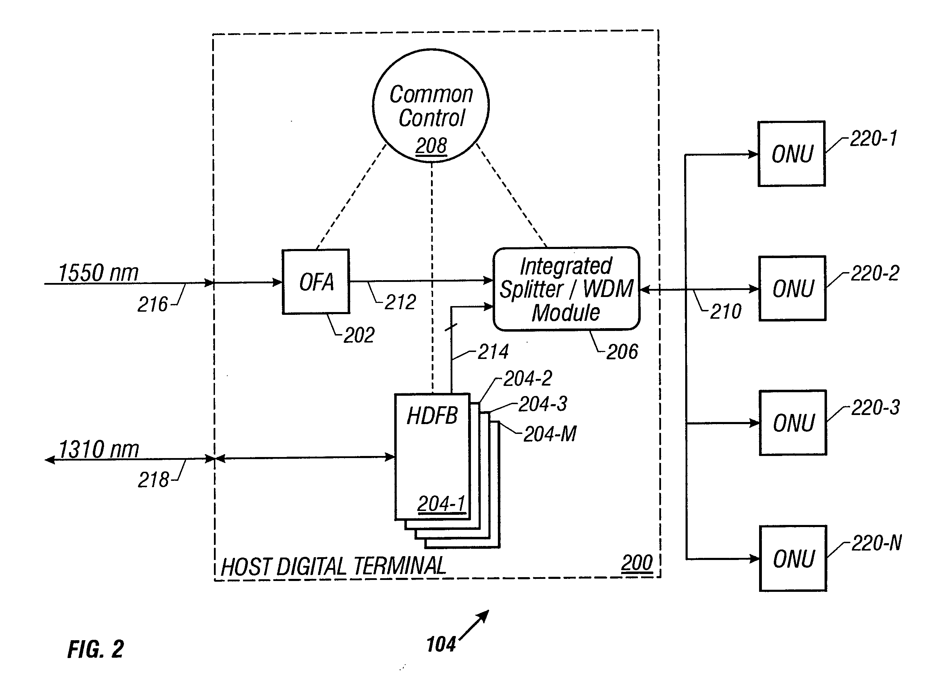

FIG. 2 depicts a functional block diagram of an exemplary embodiment of a host digital terminal (HDT) 200 within an access network, such as access network 104 described above, wherein HDT 200 is located in a central office of a service/access provider. Within HDT 200, a common control 208 operates to provide overall control, maintenance and management with respect to the constituent components of HDT 200.

In an exemplary implementation, a first optical fiber 216 operable in the 1550 nm band transmits AV signals downstream to HDT 200. Those skilled in the art should readily recognize that the AV signals are representative of a particular type of point-to-multipoint signal that can be transmitted over an optical medium in the 1550 nm band. The 1550 nm signal is received by an optical fiber amplifier (OFA) 202 of HDT 200. OFA 202 functions to amplify the optical signal to suitable levels in order to meet applicable out-of-plant power budgets.

A second optical fiber 218 operable in the 1310 nm band transmits bidirectional (i.e., traveling both upstream and downstream) digital telephony signals (wherein the telephony signals represent a particular type of point-to-point signals). The 1310 nm signal transmitted downstream is received by one or more high density fiber banks (HDFBs) (reference numeral 204-1 through 204-M), of the local access provider in order to be fanned out to multiple egress paths in accordance with the teachings of the present invention.

In an exemplary embodiment of the present invention, a splitter and a WDM array are incorporated to form an integrated multiplexer module 206. A plurality of waveguides (reference numeral 214) arriving from HDFBs and a waveguide 212 arriving from OFA 202 are received by the integrated module 206. Consequently, optical signals operating in both 1550 nm and 1310 nm bands are accommodated by the integrated module 206.

A plurality of bidirectional waveguides 210 are operable with the integrated module 206 for transmitting multiplexed optical signals thereto and therefrom. The WDM component of the integrated module 206 increases the capacity of each waveguide 210 by multiplexing different wavelengths through the same fiber. As a result, each separate waveguide may simultaneously carry optical signals operating at wavelengths of both 1550 nm and 1310 nm, thus allowing both upstream and downstream digital telephony signals and AV signals to be carried over a single optical fiber.

Individual optical fibers operable with wavelengths of both 1550 nm and 1310 nm exit HDT 200 from the integrated module 206, and interconnect with a curbside optical network unit (ONU). Reference numerals 220-1 through 220-N exemplify a plurality of such ONUs interfacing with the integrated module 206 of HDT 200. Each ONU provides an interface between the optical fiber and the CPEs of homes and offices.

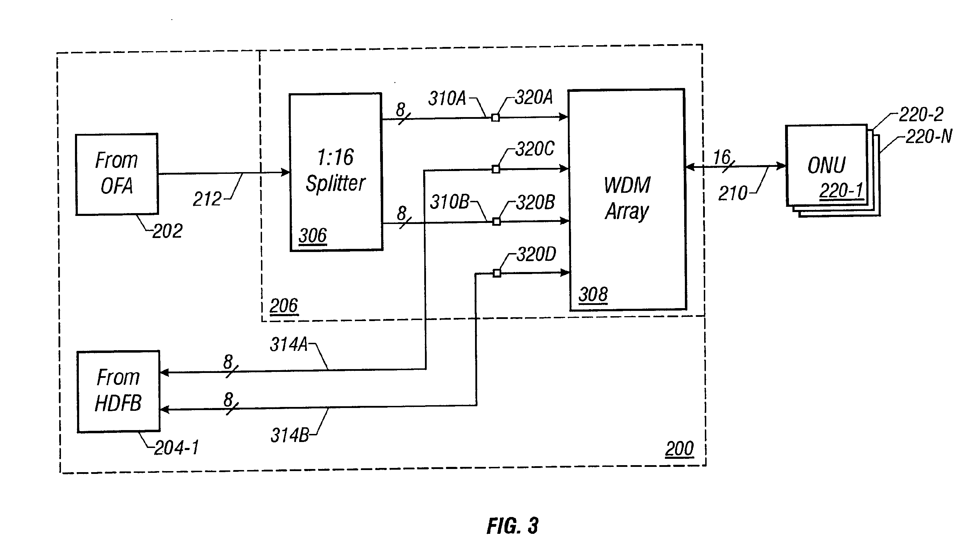

FIG. 3 depicts a block diagram of an exemplary embodiment of the integrated WDM/splitter multiplexer module 206 provided in accordance with the teachings of the present invention for advantageously combining point- to-point digital telephony signals with point-to-multipoint analog video signals. As has been described herein above, the integrated module 206 is preferably disposed within HDT 200 of the access network. In the exemplary embodiment depicted, waveguide 212 transmitting a downstream AV signal reaches the splitter component 306 of the integrated module 206 from OFA 202. A splitter 306 is operable to condition the AV signal it receives into a plurality of waveguides organized as first and second ribbon fibers 310A and 310B, respectively. In a preferred embodiment, a split ratio of 1:16 may be maintained by the splitter 306 since this is a well developed technology. Each ribbon fiber coupled to the splitter 306 may be comprised of 8 waveguides, accordingly.

Continuing to refer to FIG. 3, a WDM array component 308 of the integrated module 206 is operable to provide an effective MUX ratio of 2:1. That is, any two input signals, each operating in a different band can be multiplexed onto a single outgoing waveguide. Accordingly, WDM 308 may be comprised of a plurality of separate 2:1 WDMs organized into an integrated array. The WDM array 308 is spliced to each AV transmitting ribbon fiber with ribbon splicers 320A and 320B, respectively.

Bidirectional digital telephony signals are sourced from an HDFB e.g., HDFB 204-1, onto third and fourth ribbon fibers 314A and 314B, respectively. Each ribbon fiber is preferably comprised of 8 waveguides. The WDM array 308 is spliced to each ribbon fiber carrying bidirectional digital telephony signals with ribbon splicers 320C and 320D, respectively.

Thus, a total of four ribbon-to-ribbon splices are utilized in the exemplary embodiment depicted in FIG. 3 for advantageously coupling the WDM array component 308 to four ribbon fibers, each comprising 8 waveguides. Accordingly, 32 waveguides are received by the WDM array 308. The WDM array multiplexes the 1550 nm and 1310 nm bands so that both AV and digital telephony signals can be transmitted onto a single optical fiber. As a result, 16 bidirectional optical fibers 210 that transmit both digital telephony signals and AV signals emanate from HDT 200. Each outgoing optical fiber interconnects with a curbside ONU, e.g., ONU 220-1 through ONU 220-N, for subsequent fan-out.

In a presently preferred exemplary embodiment of the present invention, the integrated module 206 is comprised of a silicon planar light wave circuit (PLC), in order to take advantage of the step-and-print photolithography processes used in semiconductor fabrication. Those skilled in the art should appreciate that the PLC technology affords integration of the WDM and splitter components into a modularized assembly using robust ribbon-to-ribbon splicing, and is amenable to efficient mass production as well.

FIG. 4 is a flow chart of an exemplary process to construct an integrated WDM/splitter multiplexer module in accordance with the teachings of the present invention. Upon providing a WDM array operable to multiplex in a 2:1 ratio (step 401), the array is integrated with a splitter module by a first ribbon fiber (step 402). A split ratio of 1:16 may be maintained by the splitter. The first ribbon fiber is operable to carry point-to-multipoint signals (i.e., AV signals) in a plurality of waveguides. In a preferred embodiment of the present invention, a plurality of waveguides would constitute a multiple of 8 waveguides.

The WDM array is coupled to a fiber bank by a second ribbon fiber (step 403). This second ribbon fiber is operable to carry point-to-point signals (i.e., digital telephony signals) in a plurality of wave guides. As with the first ribbon fiber, a plurality of waveguides forms the second ribbon fiber in the presently preferred exemplary embodiment of the present invention.

The WDM array is spliced to the first ribbon fiber (operable to transmit the point-to-multipoint signals) by a first ribbon splicer. The WDM array is also spliced to the second ribbon fiber (operable to transmit the point-to-point signals) by a second ribbon splicer.

Although not explicitly shown in FIG. 4, the preferred exemplary methodology for constructing the integrated module involves the use of PLC technology to form the integrated module as a PLC circuit in silicon.

Based upon the foregoing Detailed Description, it should be readily apparent that the present invention provides an innovative solution for interconnecting the components used in transmitting digital telephony signals and AV signals without the shortcomings and deficiencies of the conventional systems set forth in the Background section of the present patent application. The simplified yet robust design of the integrated WDM/splitter multiplexer module results in a more easily manufacturable and modularized assembly for transmitting AV and digital telephony signals at a lower cost. Because the number of separate fusion splices required is drastically reduced by using ribbon-to-ribbon splices, a ruggedized system is obtained thereby. This translates into less repairs, providing further cost savings by the ensuing reduction in downtime. Additionally, by implementing the use of ribbon fiber, individual optical fibers will be protected, resulting in even further reductions in maintenance costs.

Moreover, the present invention allows for the use of the same or substantially the same components. For instance, a splitter with a 1:16 split ratio can be used in the integrated WDM/splitter multiplexer module. Since the technology for this type of splitter is well developed, off-the-shelf splitters may be used. The same also holds true for a WDM device with a 2:1 ratio. As a result, greater manufacturing efficiencies can be realized, thus allowing the integrated WDM/splitter multiplexer module to be produced in high volumes and at a low cost.

Further, it is believed that the operation and construction of the present invention will be apparent from the foregoing Detailed Description. While the system and method shown and described have been characterized as being preferred, it should be readily understood that various changes and modifications could be made therein without departing from the scope of the present invention as set forth in the following claims. For example, although the teachings of the present invention have been particularly exemplified by the use of 1310 nm and 1550 nm bands, it should be recognized that other optical transmission bands, known and heretofore unknown, may also be employed for purposes of the present invention. Moreover, the use of AV and digital telephony signals in the present invention is merely illustrative rather than limiting or restrictive. In addition, various split ratios and multiplexer ratios can be utilized in multiple arrangements. Accordingly, all such modifications, alterations, combinations, amendments, and the like should be deemed to be within the ambit of the present invention whose scope is defined solely by the claims set forth immediately hereinbelow.

## Claims

1. A system for integrating a first optical transmission band carrying point-to-multipoint signals with a second optical transmission band carrying point-to-point signals, comprising:
a splitter operable to condition said first optical transmission band into a plurality of waveguides organized as a first ribbon fiber;
a fiber bank for sourcing said second optical transmission band on a second ribbon fiber; and
a Wavelength Division Multiplexer (WDM) array spliced to said first ribbon fiber and said second ribbon fiber for multiplexing said first and second optical transmission bands onto a single fiber path.

2. The system for integrating a first optical transmission band carrying point-to-multipoint signals with a second optical transmission band carrying point-to-point signals, as set forth in claim 1, wherein said splitter and said WDM array are formed into an integrated multiplexer module.

3. The system for integrating a first optical transmission band carrying point-to-multipoint signals with a second optical transmission band carrying point-to-point signals as set forth in claim 2, wherein said WDM array is integrally spliced to said first ribbon fiber and said second ribbon fiber by ribbon splicers.

4. The system for integrating a first optical transmission band carrying point-to-multipoint signals with a second optical transmission band carrying point-to-point signals as set forth in claim 3, wherein said first optical transmission band is operable at around 1550 nm.

5. The system for integrating a first optical transmission band carrying point-to-multipoint signals with a second optical transmission band carrying point-to-point signals as set forth in claim 3, wherein said second optical transmission band is operable at around 1310 nm.

6. The system for integrating a first optical transmission band carrying point-to-multipoint signals with a second optical transmission band carrying point-to-point signals as set forth in claim 3, wherein said splitter has a 1:16 split ratio.

7. The system for integrating a first optical transmission band carrying point-to-multipoint signals with a second optical transmission band carrying point-to-point signals as set forth in claim 3, wherein said WDM array has a 2:1 ratio.

8. The system for integrating a first optical transmission band carrying point-to-multipoint signals with a second optical transmission band carrying point-to-point signals as set forth in claim 3, wherein said plurality of waveguides comprises eight waveguides.

9. The system for integrating a first optical transmission band carrying point-to-multipoint signals with a second optical transmission band carrying point-to-point signals as set forth in claim 3, wherein said second ribbon fiber is comprised of eight waveguides.

10. The system for integrating a first optical transmission band carrying point-to-multipoint signals with a second optical transmission band carrying point-to-point signals as set forth in claim 3, wherein said integrated multiplexer module is comprised of a silicon planar light wave circuit.

11. An integrated multiplexer module for combining digital telephony signals with analog video (AV) signals in an optical network, comprising:
a splitter operable to condition said AV signals into a plurality of waveguides organized as a first ribbon fiber; and
a Wavelength Division Multiplexer (WDM) array integrally coupled to said splitter to receive said AV signals via said first ribbon fiber, wherein a second ribbon fiber operable to carry said digital telephony signals is spliced to said WDM array.

12. The integrated multiplexer module for combining digital telephony signals with AV signals as set forth in claim 11, wherein each of said first and second ribbon fibers comprises eight waveguides.

13. The integrated multiplexer module for combining digital telephony signals with AV signals as set forth in claim 11, wherein said splitter has a split ratio of 1:16.

14. The integrated multiplexer module for combining digital telephony signals with AV signals as set forth in claim 13, wherein said WDM array has 2:1 ratio.

15. The integrated multiplexer module for combining digital telephony signals with AV signals as set forth in claim 13, wherein said WDM array is spliced to said first ribbon fiber and said second ribbon fiber by ribbon splicers.

16. The integrated multiplexer module for combining digital telephony signals with AV signals as set forth in claim 13, wherein said integrated multiplexer module is comprised of a silicon planar light wave circuit.

17. A method for constructing an integrated multiplexer module for combining a point-to-multipoint optical signal with a point-to-point optical signal in an optical network, comprising the steps of:
providing a Wavelength Division Multiplexer (WDM) array operable to multiplex in a 2:1 ratio;
integrating said WDM array with a splitter module using a first ribbon fiber operable to carry said point-to-multipoint optical signal in a first plurality of waveguides; and
coupling said WDM array to a fiber bank using a second ribbon fiber operable to carry said point-to-point optical signal in a second plurality of wave guides, wherein said WDM array is spliced to said first and second ribbon fibers by ribbon splicers.

18. The method for constructing an integrated multiplexer module for combining a point-to-multipoint optical signal with a point-to-point optical signal as set forth in claim 17, wherein said integrated multiplexer module is formed as a planar light wave circuit in silicon.

19. The method for constructing an integrated multiplexer module for combining a point-to-multipoint optical signal with a point-to-point optical signal as set forth in claim 17, wherein said point-to-multipoint optical signal is operable at around 1550 nm.

20. The method for constructing an integrated multiplexer module for combining a point-to-multipoint optical signal with a point-to-point optical signal as set forth in claim 17, wherein said point-to-point optical signal is operable at around 1310 nm.

21. An integrated multiplexer module for combining digital telephony signals with analog video (AV) signals in an optical network, said digital telephony signals being carried in a first optical band and said AV signals being carried in a second optical band, comprising:
a splitter operable to condition said first optical band into a plurality of waveguides organized as first and second ribbon fibers;
a fiber bank for sourcing said digital telephony signals in said second optical band onto third and fourth ribbon fibers; and
a Wavelength Division Multiplexer (WDM) array spliced to each of said first, second, third, and fourth ribbon fibers for multiplexing said first and second optical bands.

22. The integrated multiplexer module for combining digital telephony signals with AV signals as set forth in claim 21, wherein said WDM array is integrally spliced to said first, second, third and fourth ribbon fibers by ribbon splicers.

23. The integrated multiplexer module for combining digital telephony signals with AV signals as set forth in claim 22, wherein said splitter has a 1:16 split ratio.

24. The integrated multiplexer module for combining digital telephony signals with AV signals as set forth in claim 22, wherein said WDM array has a 2:1 ratio.

25. The integrated multiplexer module for combining digital telephony signals with AV signals as set forth in claim 22, wherein said plurality of waveguides comprises 16 waveguides.

26. The integrated multiplexer module for combining digital telephony signals with AV signals as set forth in claim 22, wherein said third and fourth ribbon fibers are comprised of 8 waveguides each.
